(19) Europäisches Patentamt
European Patent Office
Office européen des brevets

(11) **EP 4 431 726 A1**

(12) **EUROPEAN PATENT APPLICATION**

(43) Date of publication:
**18.09.2024 Bulletin 2024/38**

(21) Application number: **23162632.6**

(22) Date of filing: **17.03.2023**

(51) International Patent Classification (IPC):
**F03D 7/02** *(2006.01)* **F03D 7/04** *(2006.01)*

(52) Cooperative Patent Classification (CPC):
**F03D 7/0296; F03D 7/048;** F05B 2260/96;
F05B 2260/966; F05B 2270/333

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventor: **The designation of the inventor has not
yet been filed**

(74) Representative: **SGRE-Association
Siemens Energy Global GmbH & Co. KG
SE I IM P Intellectual Property
Siemenspromenade 9
91058 Erlangen (DE)**

(54) **EVALUATION OF NOISE EMISSION FOR A WIND PARK ENVIRONMENT**

(57) There is described a method of evaluating noise emission for a wind park environment, wherein the wind park environment comprises a wind park (100) with at least one wind turbine (101), and at least one dwelling location (105) in vicinity of the wind park (100), the method comprising:
i) determining a reference noise level (110, 120) with respect to the at least one dwelling location (105) based on initial settings of the at least one wind turbine (101), wherein the initial settings have been initially approved to be in accordance with local noise regulations;
ii) determining an instantaneous noise level (130) with respect to the at least one dwelling location (105) based on a measurement of at least one instantaneous operation parameter of the at least one wind turbine (101); and
iii) comparing the instantaneous noise level (130) with the reference noise level (110, 120), wherein the reference noise level (110, 120) is used as a relative noise threshold (120) to evaluate the noise emission.

FIG 1

EP 4 431 726 A1

**Description**

Field of invention

The present invention relates to the technical field of wind turbines. The present invention relates in particular to a method of evaluating noise emission for a wind park environment with at least one wind turbine and at least one dwelling location in vicinity of the wind park. The present invention further relates to a controller to perform the method, and to a wind turbine that comprises said controller.

Art Background

Wind turbines can be considered as an important energy production source and it can be expected that their importance and distribution will grow more and more. Yet, wind turbine, especially wind parks with a plurality of wind turbines, in the environment of dwelling locations may be considered as a disturbing factor for the population of the dwelling locations, in particular with respect to noise emissions. Therefore, it may be desired to have an efficient noise emission regulation for wind turbines in the environment of dwellings. Herefore, each country has its local regulations and corresponding absolute noise limits which are not allowed to be exceeded.

The absolute noise limit defined by the local (country) regulations hence needs to be ensured while operating a wind turbine or wind park. Since it is difficult to measure the absolute noise emissions of a wind park, such noise emissions are conventionally estimated using a noise simulation model. Nevertheless, these models comprise inherent errors due to different assumptions made and/or not known propagation methods used to design the initial fixed noise settings.

In particular, the known noise simulations may include errors which differ from the actual physical reality. To simplify the physics, assumptions are used (e.g. homogeneous atmosphere) that may lead to inherent errors. Additional assumptions are made to simplify inputs (e.g. fluctuating atmospheric parameters assumed constant, exact coordinates).

According to a first example, in the upwind region far away from the wind turbine, the noise levels may vary drastically due to atmosphere refraction. To get a better accuracy, high fidelity method with high computational efforts are required, but this cannot fit to the wind turbine application. To overcome this, lower fidelity methods have to be used and this may lead to lower accuracy of the sound pressure level prediction at the dwelling locations.

According to a second example, relative humidity may not be measured on a wind turbine, so it is assumed constant. However, this this can lead up to 3 dB fluctuations.

It follows that, by using the absolute noise limit directly as a threshold inside the wind park, there is implied a risk of exceeding the noise limits according to the local regulations.

Summary of the Invention

There may be a need to evaluate noise emission for a wind park environment in an efficient and reliable manner. This need may be met by the subject matter according to the independent claims. Advantageous embodiments of the present invention are described by the dependent claims.

According to a first aspect of the invention, there is described a method of evaluating noise emission for a wind park environment, wherein the wind park environment comprises a wind park with at least one wind turbine, and at least one dwelling location (e.g. one or more houses or a village) in vicinity (in the noise emission environment, close enough to potentially hear/determine the noise) of the wind park, the method comprising:

    i) determining a reference noise level (a noise threshold level) with respect to the at least one dwelling location (in other words: at the dwelling location) based on initial settings of the at least one wind turbine, wherein the initial settings have been initially approved to be in accordance with local noise regulations (local noise limits);
    ii) determining an instantaneous noise level (current noise level) with respect to the at least one dwelling location (in other words: at the dwelling location) based on a measurement (experimental measurement and/or calculation) of at least one instantaneous operation parameter of the at least one wind turbine; and
    iii) comparing the instantaneous noise level with the reference noise level, wherein the reference noise level is used as a relative noise threshold (made comparable to the instantaneous noise level) to evaluate the noise emission (in particular evaluate if the noise emission is within the reference noise level and thus within the local regulations).

According to a second aspect of the invention, there is described a controller (e.g. a hardware, a software, one or more processors, a control device, a remote control system, etc.), configured to perform a method as described above.

According to a third aspect of the invention, there is described a wind park and/or a wind turbine, comprising a controller as described above.

In the context of the present document, the term "reference noise level" may in particular refer to a noise level that is (at least partially) based on initial settings of a wind turbine. The term "initial settings" may in this context in particular refer to operation parameters (e.g. rotor speed or pitch) of the wind turbine, which have already been approved, e.g. by a local agency, to meet the local regulations with respect to noise emissions. These initial settings may be fixed values (after approval) which may be stored in a controller of the wind turbine, for example as look-up tables. Furthermore, the initial settings may be combined with specific environmental conditions of the wind turbine, e.g. (ranges of) wind speed/direction, season, time of the day/week, etc. According to a preferred embodiment, the reference noise level is transferred (e.g. by propagation) to a respective dwelling location, in particular all dwelling locations in the environment (from sound power level to sound pressure level). By taking into account specific environmental conditions at the dwelling location, e.g. wind speed/direction, season, time of the day/week, background noise, etc., the reference noise level may be further improved.

In the context of the present document, the term "relative noise threshold" may in particular refer to a threshold for noise emissions in a wind park environment, wherein the threshold is not the absolute value from the local regulations (as it is done conventionally), but instead a relative threshold based on the reference noise level as described above. In a basic example, the reference noise level may be used as the relative noise threshold. In a more sophisticated example, the reference noise level may be interpolated, in particular based on one or more instantaneous parameters (e.g. from wind turbine operation parameter(s) and/or environmental conditions at the dwelling location/wind turbine), in order to be (directly) comparable to an instantaneous noise level.

In the context of the present document, the term "instantaneous noise level" may in particular refer to a current noise level (at a dwelling location), which noise level may be compared to a threshold, in particular the relative noise threshold described above. Hereby, the comparison may yield a reliable information, if the current/instantaneous noise level at the dwelling location is within the local regulations.

In an example, the instantaneous noise level may be based on at least one measured (i.e. experimentally determined (e.g. by a sensor) and/or calculated) instantaneous wind turbine operation parameter, e.g. rotor speed or pitch. Like in case of the reference noise level, the instantaneous noise level may be transferred (in particular by propagation) to one or more dwelling locations (from sound power level to sound pressure level). In a preferred embodiment, environmental conditions at the dwelling location are also taken into account, e.g. wind speed/direction, season, time of the day/week, background noise, etc.

According to an exemplary embodiment, the invention may be based on the idea that a noise emission for a wind park environment can be evaluated in an efficient and reliable manner, when there is not an absolute noise level (i.e. the local regulations) used as the threshold to meet local regulations, but instead a relative noise level threshold that is based on initial settings of a wind turbine, wherein the initial settings had been approved for an operation within the local noise limits. As described above, such a relative noise level may be transferred to a dwelling location and then compared with an instantaneous noise level at said dwelling location. It has been surprisingly found by the inventors that this approach may significantly improve the reliability of noise level evaluation, i.e. keeping the noise level in a specific limit.

Exemplary Embodiments

According to an embodiment, the initial settings ("fixed noise settings") are at least partially stored in look-up tables. According to a further embodiment the initial settings are fixed values. This may provide the advantage that parameters, which are already present and approved as reliable, can be directly used without further efforts. In a specific example, a wind turbine/park noise settings table summarizes the activation parameters used to trigger the activation of the noise reduced modes. Initial fixed noise settings may e.g. depend on wind direction, wind speed, and season (time dependence) .

According to a further embodiment, the initial settings include predefined settings for a low noise operation of the at least one wind turbine. This may provide the advantage that the initial settings are already approved for an operation below the noise threshold, so that they are especially reliable.

According to a further embodiment, the initial settings include at least one wind turbine operation parameter. Examples for such wind turbine operation parameter may include: rotor speed, pitch, etc.

According to a further embodiment, determining the reference noise level further comprises:

> i) determining a wind turbine noise level for the at least one wind turbine based on the initial settings of the at least one wind turbine, and then
> ii) estimating the reference noise level at the at least one dwelling location (in particular using a propagation model) based on the wind turbine noise level (in other words: transferring the noise level of the wind turbine (sound power level) to the dwelling location (sound pressure level)).

This may provide the advantage that the reference noise level at a dwelling location may be estimated in an efficient and accurate manner based on (already present) initial settings of a wind turbine.

According to a further embodiment, estimating the reference noise level further comprises: taking into account at least one environmental condition at the at least one dwelling location. In particular, the environmental condition comprises at least one of wind speed, wind direction, daytime, season, day of the week. This may provide the advantage that the accuracy and reliability of the reference noise level at the dwelling location is further improved.

According to a further embodiment, estimating the reference noise level further comprises: taking into account a background noise for the at least one dwelling location. Also this measure may improve the accuracy and reliability of the reference noise level at the dwelling location.

According to a further embodiment, the method further comprises: interpolating the reference noise level with at least one instantaneous parameter to obtain the relative noise threshold. The instantaneous parameter may be an environmental condition of the dwelling location. In another example, the parameter may be a wind turbine operation parameter. Thereby, the reference noise level and the instantaneous noise level (at a specific dwelling location) may be comparable in an efficient and reliable manner.

According to a further embodiment, determining the instantaneous noise level further comprises:

> i) measuring (determining experimentally and/or calculating) the at least one instantaneous operation parameter for the at least one wind turbine, and then
> ii) estimating the instantaneous noise level at the at least one dwelling location (in particular using a propagation model) based on the instantaneous operation parameter (and on the resulting wind turbine noise level). In other words: transferring the noise level of the wind turbine (sound power level) to the dwelling location (sound pressure level).

According to a further embodiment, estimating the instantaneous noise level (at the dwelling location) further comprises: taking into account an environmental condition, in particular at least one of: wind speed, wind direction, daytime, season, day of the week. According to a further embodiment, estimating the instantaneous noise level (at the dwelling location) further comprises: taking into account a background noise for the at least one dwelling location. This measure may improve the accuracy and reliability of the instantaneous noise level at the dwelling location.

According to a further embodiment, the instantaneous operation parameter comprises at least one of wind speed, power, wind direction, rotational speed, pitch, nacelle position. In an example, these parameters are known during the operation of the wind turbine, e.g. by a plurality of sensors. Accordingly, no additional effort may be necessary to reliable determine said parameters.

According to a further embodiment, the at least one dwelling location comprises a plurality of dwelling locations. According to a further embodiment, the method further comprises: determining the reference noise level for each of the dwelling locations. According to a further embodiment, the method further comprises: determining the instantaneous noise level for each of the dwelling locations. In this manner, the noise level for each dwelling location within the wind park environment may be determined in an efficient and reliable manner.

According to a further embodiment, the at least one wind turbine comprises a plurality of wind turbines. According to a further embodiment, and the method further comprises: determining the reference noise level at each dwelling location as a result of the contribution from each wind turbine. According to a further embodiment, the method further comprises: determining the instantaneous noise level for each dwelling location as a result of the contribution from each wind turbine. In this manner, the noise level for each wind turbine within the wind park environment may be determined in an efficient and reliable manner.

According to a further embodiment, environmental parameters, here wind speed and wind direction, at a dwelling location may be the acoustic pressure squared weighted average at the dwelling position for the wind turbines of the win park. This may be calculated e.g. by the following formula to estimate the wind speed and wind direction (X) at a dwelling position (i) based on weighted average method (p is here acoustic pressure, N is here the number of turbines):

$$Xi \;=\; \frac{\sum_{t=1}^{N} p_{t,i}^2 * Xt}{\sum_{t=1}^{N} p_{t,i}^2}$$

Knowing the parameters such as instantaneous wind speed, wind direction and/or nacelle position, day-night time, season, etc. at every dwelling position, the relative noise threshold can be interpolated and finally compared to the instantaneous noise level (calculated/simulated overall sound pressure level). By using these levels, one may be on the safe side ensuring that the active/dynamic turbine settings are (always) compliant.

According to a further embodiment, initial settings of a specific wind turbine are used, which settings have already been approved with respect to noise regulations. These initial settings are transferred (e.g. by propagation model) to a specific dwelling location, to establish the noise limit for this dwelling location ("sound pressure level"). According to a further embodiment, noise emission of a specific wind turbine is determined based on measured wind turbine parameters. Based on these measurements, the noise at the specific dwelling location is estimated ("instantaneous noise threshold"). According to a further embodiment, it is checked if the instantaneous (measurement-based) noise at the dwelling location is within the noise limit of the dwelling which has been determined based on the initial settings.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a wind park environment with a plurality of wind turbines and dwelling locations in accordance with an exemplary embodiment of the present invention.

Figure 2 shows determining a reference noise level as a relative noise threshold in accordance with an exemplary embodiment of the present invention.

Figure 3 shows determining an instantaneous noise level in accordance with an exemplary embodiment of the present invention.

Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

According to an exemplary embodiment, the following aspect may be taken into account: In order to tackle the risk of surpassing the regulatory defined noise limits while operating a wind park, the initial fixed settings are used. The fixed settings have been defined/calculated by siting and/or external engineering offices, and have been approved by the regulatory authorities. For this reason, the wind park uses as acceptable noise limits the ones calculated based on the initial fixed settings. Calculation of dwelling sound pressure noise levels using propagation model and turbine fixed setting may be done as follows: each turbine is considered as a point source with an associated sound power level defined by the fixed turbine settings (pitch, power, rpm). The simulated sound pressure level at each dwelling location is then calculated with the use of a propagation model for a range of wind speed, wind direction, nacelle position, time of the day, season, measured dwelling background noise, etc. This results into a look up table that defines the noise limits at each dwelling for all above-mentioned parameters and correspond to the overall sound pressure level from all turbines. The overall sound pressure level at a dwelling location is here the acoustic summation of all point sources (turbines). At each time step the noise at each dwelling needs to be equal or below the instantaneous threshold. To do so, the instantaneous wind speed and wind direction need to be estimated at all dwelling positions in an example.

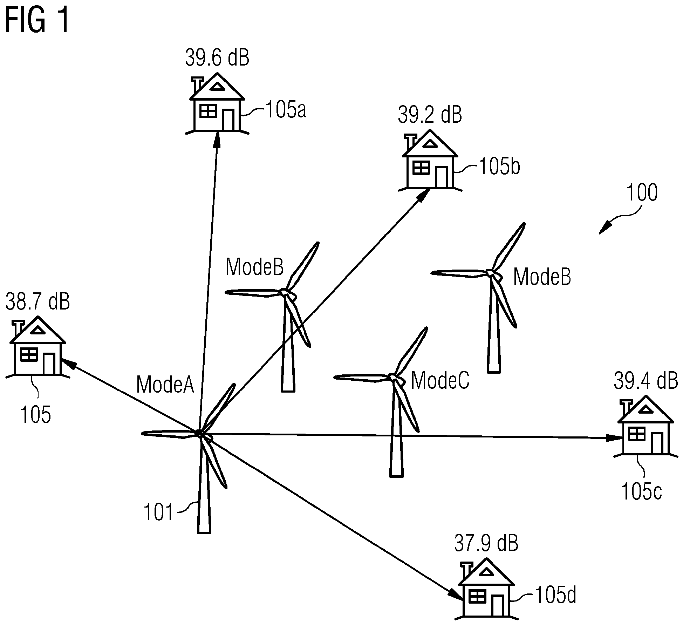

**Figure 1** shows a wind park environment 100 with a wind park that comprises a plurality of wind turbines 101 and a plurality of dwelling locations 105, 105a-105d in accordance with an exemplary embodiment of the present invention.

The dwelling locations 105 are schematically shown as houses in vicinity of the wind turbines 100. In other words, the dwelling locations 105 are located such that noise emitted by the wind turbines can be potentially heard at the dwelling locations 105. In an example, the dwelling locations 105 are located such that a potential exceed of the local noise regulations can be detected at the dwelling locations 105. Noise emission is illustrated schematically as arrows from one of the wind turbines 101 to each dwelling location 105 in the vicinity/environment.

The numbers indicated in decibel at the dwelling locations 105 are schematic and only for illustration purposes. For the example of Sweden, the absolute noise limit according to the local regulations at a dwelling location is 40 decibels. This level is met at each of the dwelling locations 105 in this example.

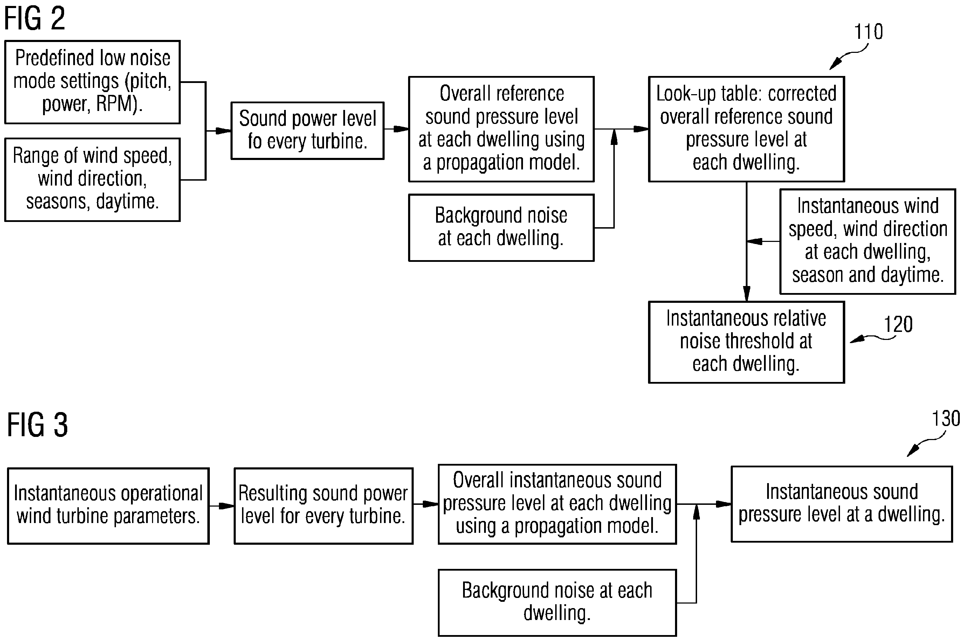

**Figure 2** shows determining a reference noise level 110 in accordance with an exemplary embodiment of the present invention. In this flow chart, specific examples are provided for illustrative purposes. In the first place, initial settings of the wind turbine are applied, wherein the initial settings have been initially approved to be in accordance with local noise regulations.

In this specific example, the initial settings include predefined low noise mode settings for pitch, power, rotor movement, etc. Further, additional parameters are considered, here range of wind speed, wind direction, season, time of the day, etc. For every turbine, a first individual reference noise level (sound power level) is determined.

In the next step, the reference noise level is transferred from the wind turbine to the dwelling location by a propagation model (simulation) (sound pressure level). Hereby, the reference noise levels for all wind turbines of the wind park are considered together at each of the dwelling locations of the wind park environment (overall sound pressure level). Furthermore, the background noise at each dwelling location is taken into account.

Based on the overall reference noise level and the dwelling location background noise, a corrected overall reference noise level 110 for the wind park environment is calculated (here: corrected overall sound pressure level). The corrected overall reference noise level 110 can be stored as a look-up table, e.g. in a controller.

In a further step, the corrected overall reference noise level 110 is interpolated with at least one instantaneous environmental condition at the dwelling location, for example wind speed, wind direction, season, daytime, etc. In this manner, a relative noise threshold 120 (instantaneous relative noise threshold at each dwelling location) is obtained that can be compared to the instantaneous noise level 130 (see Figure 3 below).

**Figure 3** shows determining an instantaneous noise level 130 in accordance with an exemplary embodiment of the present invention. In the first place, current operation parameters (pitch, rotor speed, etc.) of the wind turbine are measured (determined experimentally and/or calculated, in particular using sensors of the wind turbine) at each wind turbine (sound power level). The instantaneous operation parameters are transferred (e.g. by a propagation model) to each of the dwelling locations to obtain an overall instantaneous sound pressure level.

The instantaneous operation parameters, together with the background noise at the dwelling location, are taken together as the instantaneous noise level 130 at a dwelling location (instantaneous sound pressure level). The instantaneous noise level 130 is then compared with the above identified relative noise threshold 120.

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

## Claims

1. A method of evaluating noise emission for a wind park environment, wherein the wind park environment comprises a wind park (100) with at least one wind turbine (101), and at least one dwelling location (105) in vicinity of the wind park (100), the method comprising:

   determining a reference noise level (110, 120) with respect to the at least one dwelling location (105) based on initial settings of the at least one wind turbine (101), wherein the initial settings have been initially approved to be in accordance with local noise regulations;
   determining an instantaneous noise level (130) with respect to the at least one dwelling location (105) based on a measurement of at least one instantaneous operation parameter of the at least one wind turbine (101); and
   comparing the instantaneous noise level (130) with the reference noise level (110, 120), wherein the reference noise level (110, 120) is used as a relative noise threshold (120) to evaluate the noise emission.

2. The method according to claim 1, wherein the initial settings are at least partially stored in look-up tables, and/or wherein the initial settings are fixed values.

3. The method according to claim 1 or 2, wherein the initial settings include predefined settings for a low noise operation of the at least one wind turbine (101).

4. The method according to any one of the preceding claims, wherein the initial settings include at least one wind turbine operation parameter.

5. The method according to any one of the preceding claims, wherein determining the reference noise level (110, 120) further comprises:

   determining a wind turbine noise level for the at least one wind turbine (101) based on the initial settings of the at least one wind turbine (101); and then
   estimating the reference noise level (110, 120) at the at least one dwelling location (105), in particular using a propagation model, based on the wind turbine noise level.

6. The method according to claim 5, wherein estimating the reference noise level (120) further comprises: taking into account at least one environmental condition at the at least one dwelling location (105), in particular at least one of wind speed, wind direction, daytime, season, day of the week.

7. The method according to claim 5 or 6, wherein estimating the reference noise level (110, 120) further comprises: taking into account a background noise for the at least one dwelling location (105).

8. The method according to any one of the preceding claims, further comprising: interpolating the reference noise level (110) with at least one instantaneous parameter, in particular a wind turbine operation parameter and/or an environmental condition, to obtain the relative noise threshold (120).

9. The method according to any one of the preceding claims, wherein determining the instantaneous noise level (130) further comprises:

   measuring the at least one instantaneous operation parameter for the at least one wind turbine (101); and then
   estimating the instantaneous noise level (130) at the at least one dwelling location (105), in particular using a propagation model, based on the instantaneous operation parameter and on the resulting wind turbine noise level.

10. The method according to claim 9, wherein estimating the instantaneous noise level (130) further comprises:

taking into account an environmental condition, in particular at least one of: wind speed, wind direction, daytime, season, day of the week; and/or
taking into account a background noise for the at least one dwelling location (105).

11. The method according to any one of the preceding claims, wherein the instantaneous operation parameter comprises at least one of wind speed, power, wind direction, rotational speed, pitch, nacelle position.

12. The method according to any one of the preceding claims, wherein the at least one dwelling location (105) comprises a plurality of dwelling locations (105a-d), and wherein the method further comprises:

determining the reference noise level (110, 120) for each of the dwelling locations (105); and/or
determining the instantaneous noise level (130) for each of the dwelling locations (105).

13. The method according to any one of the preceding claims, wherein the at least one wind turbine (101) comprises a plurality of wind turbines (101), and wherein the method further comprises:

determining the reference noise level (110, 120) at each dwelling location (105) as a result of the contribution from each wind turbine (101); and/or
determining the instantaneous noise level (130) at each dwelling location (105) as a result of the contribution from each wind turbine (101).

14. A controller, configured to perform a method according to any one of the preceding claims.

15. A wind park (100) and/or a wind turbine (101), comprising a controller according to the preceding claim.

FIG 1

FIG 2

| Predefined low noise mode settings (pitch, power, RPM). |
| Range of wind speed, wind direction, seasons, daytime. |

→ Sound power level fo every turbine. → Overall reference sound pressure level at each dwelling using a propagation model.

Background noise at each dwelling.

→ Look-up table: corrected overall reference sound pressure level at each dwelling. 110

Instantaneous wind speed, wind direction at each dwelling, season and daytime.

Instantaneous relative noise threshold at each dwelling. 120

FIG 3

130

| Instantaneous operational wind turbine parameters. | → | Resulting sound power level for every turbine. | → | Overall instantaneous sound pressure level at each dwelling using a propagation model. | → | Instantaneous sound pressure level at a dwelling. |

Background noise at each dwelling.

EP 4 431 726 A1

Europäisches
Patentamt

European
Patent Office

Office européen
des brevets

# EUROPEAN SEARCH REPORT

**Application Number**

EP 23 16 2632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/140818 A1 (MATESANZ GIL ALVARO [ES]) 6 June 2013 (2013-06-06) * paragraphs [0006] – [0007] * * paragraphs [0015] – [0065] * * figures * | 1-15 | INV. F03D7/02 F03D7/04 |
| X | US 2007/031237 A1 (BONNET LAURENT [DE]) 8 February 2007 (2007-02-08) * paragraphs [0006] – [0009] * * paragraphs [0016] – [0050] * * figures * | 1-15 | |
| X | US 2022/049680 A1 (EGEDAL PER [DK] ET AL) 17 February 2022 (2022-02-17) * paragraphs [0044] – [0065] * * figures * | 1-15 | |
| X | US 10 024 304 B2 (GEN ELECTRIC [US]) 17 July 2018 (2018-07-17) * column 2, line 56 – column 10, line 55 * * figures * | 1-15 | |
| A | US 2019/331093 A1 (QVIST MARTIN [DK]) 31 October 2019 (2019-10-31) * abstract * * figures * | 1-15 | **TECHNICAL FIELDS SEARCHED (IPC)** F03D |

The present search report has been drawn up for all claims

| Place of search | Date of completion of the search | Examiner |
|---|---|---|
| The Hague | 22 August 2023 | Rini, Pietro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 23 16 2632

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | | Publication date |
|---|---|---|---|---|---|
| US 2013140818 A1 | | 06-06-2013 | EP | 2599996 A1 | 05-06-2013 |
| | | | US | 2013140818 A1 | 06-06-2013 |
| US 2007031237 A1 | | 08-02-2007 | EP | 1748184 A2 | 31-01-2007 |
| | | | US | 2007031237 A1 | 08-02-2007 |
| US 2022049680 A1 | | 17-02-2022 | BR | 112021004983 A2 | 08-06-2021 |
| | | | CN | 112739905 A | 30-04-2021 |
| | | | EP | 3628861 A1 | 01-04-2020 |
| | | | EP | 3830416 A1 | 09-06-2021 |
| | | | US | 2022049680 A1 | 17-02-2022 |
| | | | WO | 2020064319 A1 | 02-04-2020 |
| US 10024304 B2 | | 17-07-2018 | CA | 2930475 A1 | 21-11-2016 |
| | | | DK | 3096006 T3 | 20-01-2020 |
| | | | EP | 3096006 A1 | 23-11-2016 |
| | | | ES | 2763383 T3 | 28-05-2020 |
| | | | US | 2016341180 A1 | 24-11-2016 |
| US 2019331093 A1 | | 31-10-2019 | EP | 3551879 A1 | 16-10-2019 |
| | | | US | 2019331093 A1 | 31-10-2019 |
| | | | WO | 2018103801 A1 | 14-06-2018 |

EPO FORM P0459

For more details about this annex : see Official Journal of the European Patent Office, No. 12/82